Europäisches Patentamt

European Patent Office

Office européen des brevets

(11) Veröffentlichungsnummer: **0 334 161**
**A2**

(12) **EUROPÄISCHE PATENTANMELDUNG**

(21) Anmeldenummer: **89104462.0**

(22) Anmeldetag: **14.03.89**

(51) Int. Cl.4 **F16H 57/12 , F16H 1/40**

(30) Priorität: **23.03.88 US 172153**

(43) Veröffentlichungstag der Anmeldung:
**27.09.89 Patentblatt 89/39**

(84) Benannte Vertragsstaaten:
**BE DE FR GB IT**

(71) Anmelder: **DEERE & COMPANY**
**1 John Deere Road**
**Moline Illinois 61265(US)**

(72) Erfinder: **Cook, Michael S.**
**426 Shirley Street**
**Waterloo Iowa 50707(US)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) **Verfahren und Vorrichtung zur Spieleinstellung eines Kegelraddifferentials.**

(57) Um das Spiel zwischen Kegelritzeln (30) und Kegelrädern (28) bei einem Kegelraddifferential einzustellen, werden die Teile in die entsprechende Differentialgehäusehälfte (22) eingesetzt. Die Kegelritzel (30) werden an der Differentialgehäusehälfte (22) festgehalten, und das Kegelrad (28) wird in Richtung Kegelritzel (30) gedrückt. Die hierdurch verursachte Verschiebung des Kegelrades (28) wird gemessen. Eine Zwischenlage (36) wird zwischen das Kegelrad (28) und das Differentialgehäuse (22) eingefügt, deren Dicke der Differenz zwischen der gemessenen Verschiebung und einer vorherberechneten, für das konstruktionsbedingte Spiel erforderlichen Verschiebung entspricht.

Eine Vorrichtung zur Durchführung des Verfahrens enthält eine Spannvorrichtung (10), durch die die Kegelritzel (30) am Differentialgehäuse (22) festgelegt werden, Ausrichtmittel (18) zur genauen Ausrichtung des Differentialgehäuses (22) und des Kegelrades (28) relativ zueinander, einen Luftzylinder (12), durch den sich das Kegelrad (28) in Richtung Kegelritzel (30) verschieben läßt und ein Mikrometer (14) zur Messung der Verschiebestrecke des Kegelrades (28). Die Spannvorrichtung (10) enthält vorzugsweise Haltestifte (40), die mittels Federkraft das Kegelrad (28) von den Kegelritzeln (30) wegdrücken, um gegebenenfalls ein Kupplungspaket (26) eines Selbstsperrdifferentials zusammenzudrücken.

Fig. 1

## Verfahren und Vorrichtung zur Spieleinstellung eines Kegelraddifferentials

Die Erfindung betrifft ein Verfahren zur Einstellung des Spiels zwischen den Kegelrädern und den Kegelritzeln eines Kegelraddifferentials, bei dem zunächst ein Kegelrad und die Kegelritzel in eine Differentialgehäusehälfte eingesetzt werden, sowie eine Vorrichtung zur Durchführung des Verfahrens.

Ein typisches Kegelraddifferential besitzt zwei Kegelräder und mehrere Kegelritzel, normalerweise vier, welche in einem Differentialgehäuse angeordnet sind. Handelt es sich um ein Selbstsperrdifferential. so sind zwischen jedem Kegelrad und dem Differentialgehäuse mehrere Kupplungs- und Trennscheiben angeordnet, um das Kegelrad mit dem Gehäuse zu kuppeln. Für einen einwandfreien Betrieb ist normalerweise ein kleines Spiel, bzw. ein kleiner Totgang zwischen jedem Kegelrad und den Kegelritzeln erforderlich. Das Spiel wird gewöhnlich eingestellt, indem zwischen das Kegelrad und das Gehäuse Zwischenlagen entsprechender Dicke eingefügt werden. Bei Selbstsperrdifferentialen werden die Zwischenlagen zwischen das Kupplungspaket und entweder das Gehäuse oder das Kegelrad eingefügt.

Wegen der unvermeidlichen Fertigungstoleranzen muß das Spiel zwischen jedem Kegelrad und den Kegelritzeln gewöhnlich für jedes Differential gesondert durch Auswahl von Zwischenlagenscheiben geeigneter Dicke eingestellt werden. Das Spiel wurde bisher so eingestellt, daß zunächst ein Kegelrad und das Kupplungspaket (sofern eines verwendet wurde) in die entsprechende Differentialgehäusehälfte eingesetzt wurde. Hierauf wurden die auf ihren Zapfen montierten Kegelritzel in die Lage gebracht, die sie bei fertig montiertem Differential einnehmen. Die Kegelritzel wurden dann per Hand hin und her gedreht, wobei durch ein Mikrometer das Spiel unmittelbar gemessen wurde, indem beispielsweise ermittelt wurde, wie weit sich jedes Kegelritzel verdrehen läßt, bevor es an das Kegelrad anstößt. Das durchschnittlich gemessene Spiel aller Kegelritzel wurde dann herangezogen, um die Dicke der Zwischenlagen abzuschätzen, die erforderlich war, um das Spiel entsprechend der Konstruktionsspezifikation einzustellen. Hierauf wurde ein Zwischenlagenpaket dieser Dicke eingefügt und das Verfahren wiederholt, bis das erforderliche Spiel eingestellt war. Dieses ganze Verfahren wurde dann mit dem anderen Kegelrad in der anderen Differentialgehäusehälfte wiederholt. Diese Einstellung und Zusammenstellung konnte für ein ganzes Differential bis zu drei Stunden dauern.

Die der Erfindung zugrunde liegende Aufgabe wird darin gesehen, ein Verfahren und eine Vorrichtung anzugeben, mit deren Hilfe eine signifikante Verringerung der Einstellzeit für ein Differential erreichbar ist.

Die Aufgabe wird erfindungsgemäß durch die Merkmale des Patentanspruchs 1 gelöst. Anstelle des Hin- und Herdrehens der Kegelritzel werden die Kegelritzel am Differentialgehäuse festgelegt und das Kegelrad wird in Richtung der Kegelritzel bewegt. Es ist relativ einfach im voraus zu berechnen, wie groß der Abstand zwischen dem Kegelrad und den Kegelrädern sein sollte, damit sich das gewünschte Spiel ergibt. Dieser erforderliche, richtige Abstand wird von der tatsächlich gemessenen Wegstrecke, die das Kegelrad in Richtung Kegelritzel zurückgelegt hat, abgezogen. Die Differenz ergibt die erforderliche Zwischenlagendicke. Zwischenlagen dieser Dicke werden in das Differential eingefügt. Dann wird die Verschiebung des Kegelrades überprüft, und die Einstellung dieses Kegelrades ist abgeschlossen. Der Vorgang wird für das andere Kegelrad wiederholt. Hierauf kann das Differential zusammengebaut werden. Mit einer Vorrichtung gemäß Patentanspruch 4 kann der gesamte Vorgang in nicht mehr als zehn Minuten durchgeführt werden.

Die erfindungsgemäße Vorrichtung zur Durchführung des beschriebenen Verfahrens, wie sie aus Patentanspruch 4 hervorgeht, enthält vorzugsweise einen Haltering, auf dem eine Differentialgehäusehälfte in eine vorherbestimmbare Position ausgerichtet werden kann. Das Kegelrad, das Kupplungspaket (falls vorhanden) und die Kegelritzel werden in das Differentialgehäuse eingesetzt und der Spannmechanismus drückt die Kegelradzapfen in ihre Sollage auf das Gehäuse. Der Spannmechanismus drückt vorzugsweise auch das Kegelrad und das Kupplungspaket zusammen, um ein etwaiges Spiel zwischen diesen zu beseitigen, welches zu einer falschen Ablesung führen könnte.

Vorzugsweise ist ein Luftzylinder vorgesehen, durch den sich das Kegelrad gegebenenfalls gegen die Vorspannungskraft des Spannmechanismus gegen die Kegelritzel drücken läßt. Wenn auch der hierfür erforderliche Druck von Hand aufgebracht werden kann, hat der Luftzylinder doch den Vorteil, daß unterschiedliche Druckkräfte infolge Handbetätigung ausgeschlossen werden können.

Ein Mikrometer ist besonders geeignet, um die Verschiebung des Luftzylinders und der Kegelräder zu messen. Falls dies gewünscht wird, kann das Mikrometer so geeicht werden, daß es direkt die Dicke der erforderlichen Zwischenlage anzeigt. Hierfür sind für unterschiedliche Differentiale unterschiedliche Skalen für das Mikrometer erforderlich.

Nachdem die Messung ausgeführt wurde, wird die Spannvorrichtung gelöst und das Differential teilweise wieder zerlegt, um die Zwischenlagen einfügen zu können. Dann werden die Teile wieder zusammengesetzt und die Messung wird überprüft. Der gesamte Vorgang wird mit der anderen Differentialgehäusehälfte wiederholt. Zum Schluß wird das Differential entgültig zusammengebaut.

Anhand der Zeichnung, in der ein Ausführungsbeispiel der Erfindung gezeigt ist, werden die Erfindung sowie weitere vorteilhafte Ausgestaltungen und Weiterbildungen der Erfindung näher erläutert.

Es zeigt:

Fig. 1 eine Teilschnittansicht der erfindungsgemäßen Einstellvorrichtung, und

Fig. 2 eine Aufsicht entlang der Linie 2-2 in Fig. 1.

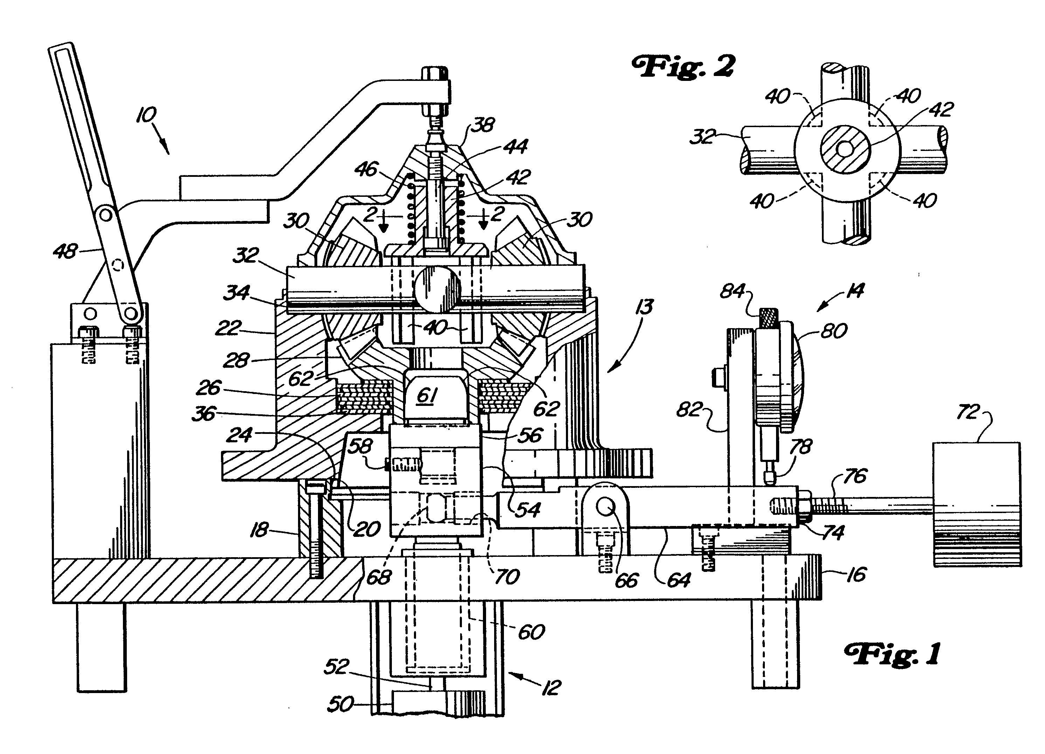

Die Figur 1 zeigt eine bevorzugte Einstellvorrichtung gemäß der Erfindung, welche geeignet ist, das erfindungsgemäße Verfahren auszuführen. Wie in Figur 1 gezeigt, weist die Einstellvorrichtung eine Spannvorrichtung 10, einen Luftzylinder 12 und ein Mikrometer 14 auf, welche mit einem Untergestell 16 verbunden sind. Ferner ist ein Haltering 18 mit dem Untergestell 16 verbunden und koaxial zum Luftzylinder 12 ausgerichtet. Bei Anwendung liegt der Lageransatz 20 der Differentialgehäusehälfte 22 satt an der Innenseite des inneren Randes 24 des Halteringes 18 an und legt damit genau die Lage der Differentialgehäusehälfte 22 relativ zum Luftzylinder 12 fest.

Die Vorrichtung ist mit einer Hälfte eines von ihm aufgenommenen Selbstsperrdifferentials 13 dargestellt. Neben der Differentialgehäusehälfte 22 enthält das Differential mehrere miteinander verschachtelte Kupplungs- und Trennscheiben, die ein Kupplungspaket 26 bilden, sowie ein Kegelrad 28 und mehrere auf einem Kreuzzapfen 32 montierte Kegelritzen 30. Der Kreuzzapfen 32 ruht in hierfür vorgesehenen Vertiefungen im Differentialgehäuse 22. Eine Zwischenlage 36 liegt zwischen dem Kupplungspaket 26 und der Differentialgehäusehälfte 22.

Die Spannvorrichtung 10 dient dazu, den Kreuzzapfen 32 in die Vertiefungen 34 zu drücken und das Kupplungspaket 26 und das Kegelrad 28 vollständig zusammenzudrücken. Insbesondere weist die Spannvorrichtung 10 an einem ihrer Enden eine Spannkappe 38 auf, deren äußerer Rand gegen den Kreuzzapfen 32 niedergedrückt wird, wenn die Spannvorrichtung 10 geschlossen ist. Dabei wird der Kreuzzapfen 32 fest in die Vertiefungen 34 gepreßt. Die Spannkappe 38 ist so geformt, daß eine störende gegenseitige Beeinflussung mit den Kegelritzeln 30 vermieden wird, so daß die Kegelritzel 30 frei um die zugehörigen Kreuzzapfenachsen verdrehbar sind. Die Spannvorrichtung weist ferner einige Finger oder Haltestifte 40 auf, die sich aus der Mitte der Spannkappe 38 nach unten erstrecken, um gegen die obere Oberfläche des Kegelrades 28 zu drücken und dabei das Kupplungspaket 26 und das Kegelrad 28 zusammenzupressen. Diese Haltestifte 40 erstrecken sich von einem mittleren Zylinder 42 aus, welcher über eine Schulterschraube 44 verschiebbar an der Spannkappe 38 befestigt ist. Eine sich zwischen Spannkappe 38 und den Haltestiften 40 erstreckende Feder 46 spannt die Haltestifte 40 gegen das Kegelrad 28 vor. Wie aus Fig. 2 hervorgeht, sind die Haltestifte 40 so bemessen und angeordnet, daß sie sich zwischen den Kreuzzapfen 32 hindurch erstrecken, ohne diese oder die Kegelritzel 30 zu beeinflussen. Gemäß Fig. 1 kann die Spannkraft der Spannvorrichtung 10 durch einen einfachen Hebelmechanismus 48 aufgebracht werden. Offensichtlich ist hier auch ein anderer geeigneter Mechanismus verwendbar.

Der Luftzylinder 12 weist einen pneumatischen Zylinder 50 auf, welcher mit Druckluft gefüllt wird, um das Kegelrad 28 anzuheben, wie weiter unten beschrieben wird. Der pneumatische Zylinder 50 trägt einen sich in Richtung Kegelrad 28 erstreckenden Stab 52. Das obere Ende des Stabes 52 steht mit einem Zylinder 54 in Verbindung, der einen Kraftübertrager 56 aufweist. Der Kraftübertrager 56 ist vorzugsweise fest mit dem Zylinder 54 verbunden, z.B. mit Hilfe eines Gewindestiftes 58. Der Stab 52 wird in einer Reduzierhülse 60 geführt, welche an dem Untergestell 16 der Einstellvorrichtung befestigt ist, um so eine genaue Ausrichtung der ganzen Luftzylinderapparatur 12 zu gewährleisten. Der Kraftübertrager 56 weist ein sich nach oben erstreckendes Paßstück 61 auf, welches eng in der Bohrung des Kegelrades 28 anliegt. Die obere Oberfläche 62 des Paßstückes 61 ist vorzugsweise gewölbt oder kegelförmig ausgebildet, um einen leichten Einsatz des Paßstückes 61 in das Kegelrad 28 zu ermöglichen. Da die Verbindung zwischen Paßstück 61 und Kegelrad 28 spielfrei ist, ist das Kegelrad 28 hinsichtlich der äußeren Elemente des Differentials genau ausgerichtet, sofern es auf dem Paßstück 61 montiert ist. Der spielfreie Sitz hat jedoch auch zur Folge, daß das Paßstück 61 in dem Kegelrad 28 stecken bleiben kann. Daher werden geeignete Maßnahmen, wie beispielsweise ein Gewindestift 58 zum Festsetzen des Paßstückes 61 in dem Zylinder 54, vorgeschlagen. Die untere Fläche des Kegelrades 28 liegt an der oberen Fläche des Kraftübertragers 56 an, so daß der Zylinder 54 das Kegelrad 28 nach oben zu den Kegelritzeln 30 hin drücken kann.

Das Mikrometer 14 enthält eine Stange 64, die in einem Drehpunkt 66 verkippbar an dem Untergestell 16 befestigt ist. Ein Ende 68 der Stange 64 erstreckt sich in ein Loch 70 im Zylinder 54, so daß das Ende 68 mit dem Zylinder 54 auf und ab bewegt wird. Das Stangenende 68 ist vorzugsweise kugelförmig ausgebildet, um Reibungskräfte zwischen seiner äußeren Oberfläche und der Bohrung 70 zu vermindern. Am anderen Ende 74 der Stange 64 ist vorzugsweise ein Gegengewicht 72 angeordnet. Die Lage des Gegengewichtes 72 hinsichtlich der Stange 64 ist vorzugsweise durch ein Schraubengewinde 76 einstellbar. Dies erlaubt die genaue Einstellung einer Gleichgewichtslage. An dem Untergestell 16 ist ferner über eine Stütze 82 ein Meßkolben 78 mit einer Teilstrichanzeige 80 befestigt, wobei der Kolben 78 und die Anzeige 80 relativ zum Untergestell genau ausgerichtet sind. Die Teilstrichanzeige 80 läßt sich vorzugsweise durch einen Einstellknopf 84 einstellen, so daß eine Rückstellung auf Null nach jeder Verwendung möglich ist. Wie dargestellt, drückt der Kolben 78 gegen die obere Oberfläche der Stange 64, und die Teilstrichanzeige 80 zeigt den Betrag der Verstellung der Stange 64 an diesem Punkt an. Vorzugsweise drückt der Kolben 78 an einer Stelle gegen die Stange, die genau den gleichen Abstand zum Drehpunkt 66 hat, wie die Mittellinie des Luftzylinders 12 und das kugelförmige Ende der Stange 64. Auf diese Weise ist die Verstellung der Stange 64 an der Stelle des Angriffspunktes des Meßkolbens 78 genau so groß wie die Verstellung des Kegelrades 28. Die Teilstrichanzeige 80 sollte so geeicht werden, daß eine genaue Ablesung der Verstellung möglich ist. Falls dies gewünscht ist, kann die Skaleneinteilung auf der Teilstrichanzeige 80 bereits so vorgenommen werden, daß unmittelbar die Dicke der Zwischenlage 36 angezeigt wird. Die Teilstrichanzeige 80 kann auch mehrere voreingestellte Skaleneinteilungen aufweisen, so daß dieselbe Einstellvorrichtung für die Einstellung verschiedener Differentiale verwendet werden kann.

Im folgenden wird die Anwendungsweise der erfindungsgemäßen Apparatur beschrieben. Zunächst wird die Differentialgehäusehälfte 22 auf den Haltering 18 aufgesetzt. Dann werden das Kupplungspaket 26 und das Kegelrad 28 in die Gehäusehälfte 22 eingesetzt. Die Kegelritzel 30 werden auf die entsprechenden Kreuzzapfenachsen 32 aufgeschoben, welche dann in die Vertiefungen 34 in der Gehäusehälfte 22 eingesetzt werden. Über die derart zusammengestellte Differentialgehäusehälfte 22 wird hierauf die Spannvorrichtung 10 positioniert, wobei die Haltestifte 40 sich zwischen den Kreuzzapfen 32 erstrecken, um mit dem Kegelrad 28 in Eingriff zu treten. Bei geschlossener Spannvorrichtung 10 werden die Kreuzzapfen 32 in den Vertiefungen 34 gehalten und das Kupplungspaket 26 und das Kegelrad 28 durch die Feder 46 und die Haltestifte 40 zusammengepreßt. Jetzt wird der Luftzylinder 12 in Betrieb genommen, um zunächst das Kegelrad 28 in Richtung der Kegelritzel 30 zu drücken. Dann wird der Luftzylinder 12 wieder entlastet, so daß sich das Kegelrad 28 durch die Kraft der Feder 46 nach unten bewegt. Dieser Vorgang wird mehrere Male wiederholt, wodurch ein sauberer Sitz des Kegelrades 28 und der Kegelritzel 30 gewährleistet wird. Jetzt wird die Teilstrichanzeige 80 auf Null gestellt, der Luftzylinder 12 in Betrieb gesetzt und an der Teilstrichanzeige 80 der Abstand abgelesen, um den sich das Kegelrad 28 verschoben hat. Die zuvor berechnete korrekte Verschiebung zwischen Kegelrad 28 und Kegelrädern 30 wird von dem abgelesenen Wert abgezogen. Diese Differenz ergibt die richtige Dicke des Zwischenlagenpaketes. Erfordert beispielsweise die Konstruktionsspezifikation einen Abstand von 1,8 mm, während die Messung 10 mm ergibt, so muß eine Zwischenlagendicke von 8,2 mm verwendet werden.

Die Spannvorrichtung 10 wird nun gelöst, die Teile werden aus der Differentialgehäusehälfte 22 herausgenommen, das Beilagepaket 36 wird eingesetzt und schließlich werden die anderen Teile wieder in die Differentialgehäusehälfte eingefügt. Dann wird die Spannvorrichtung 10 wieder geschlossen und die Messung wiederholt. Liegt die Teilstrichanzeige 80 nun innerhalb des vorher festgelegten Toleranzbereiches für das Zahnradspiel, so ist die Einstellung für diese Differentialgehäusehälfte 22 abgeschlossen. Beispielsweise liegt ein typischer Toleranzbereich für eine ausgewählte Verschiebung von 1,8 mm zwischen 1,0 mm und 2,3 mm, so daß das Spiel dann als richtig eingestellt angesehen werden kann, wenn die Teilstrichanzeige 80 in diesem Bereich liegt. Liegt die Messung nicht innerhalb dieser Toleranz, so wird die Abweichung angezeigt und ein Zwischenlagenpaket 36 entsprechender Dicke eingefügt bzw. herausgenommen.

Dieses Verfahren wird dann mit dem anderen Kegelrad und der anderen Differentialgehäusehälfte wiederholt. Ist die passende Zwischenlagendicke für jede Seite bestimmt, so kann das Differential rasch zusammengesetzt werden, womit die Einstellung abgeschlossen ist.

Die Einstellvorrichtung entsprechend der Erfindung ist ohne weiteres für verschiedene Differentiale unterschiedlicher Größe anwendbar. Hierbei ist es lediglich erforderlich, den auf das Differential angepaßten Haltering 18 und den Kraftübertrager 56 mit dem Paßstück 61 zu ersetzen und die Position des Gewichtes 72 einzustellen, um einer Abweichung der Masse des Kraftübertragers 56 entgegenzuwirken. Weichen die einzustellenden Differentiale sehr stark voneinander ab, so kann es für die Anpassung an die Differentialabmessungen auch erforderlich sein, die Spannkappe 38 und das Haltestiftteil 40 auszuwechseln.

Vorstehend wurde die Erfindung anhand eines bevorzugten Ausführungsbeispieles beschrieben. Das Verfahren läßt sich jedoch mit jeder geeigneten Vorrichtung und sogar von Hand ausführen. Auch wenn das Verfahren und die Vorrichtung hier in Verbindung mit einem Selbstsperrdifferential beschrieben wurden, so läßt sich das Spiel auf ähnliche Weise auch bei anderen Arten von Kegelraddifferentialen anwenden.

**Ansprüche**

1. Verfahren zur Einstellung des Spiels zwischen den Kegelrädern und den Kegelritzeln eines Kegelraddifferentials, bei dem zunächst ein Kegelrad und die Kegelritzel in eine Differentialgehäusehälfte eingesetzt werden, dadurch gekennzeichnet, daß das Kegelrad (28) in Richtung der Kegelritzel (30) gedrückt wird, während die Kegelritzel (30) in ihrer Sollage in der Differentialgehäusehälfte (22) festgehalten werden, daß der Abstand, um den sich das Kegelrad (28) beim Drücken verschiebt, gemessen wird, daß ein Zwischenlagenpaket (36) gebildet wird, dessen Dicke in etwa der Differenz zwischen dem gemessen Abstand und einem vorherbestimmten erforderlichen Abstand zwischen Kegelrad (28) und Kegelritzeln (30) entspricht, und daß das Zwischenlagenpaket (36) in die Differentialgehäusehälfte (22) zwischen Gehäuse (22) und Kegelrad (28) eingefügt wird.

2. Verfahren nach Anspruch 1, dadurch gekennzeichnet, daß ein zweites Kegelrad (28) und die Kegelritzel (30) in eine zweite Differentialgetriebehälfte (22) eingesetzt werden, und daß entsprechend Anspruch 1 verfahren wird.

3. Verfahren nach Anspruch 1 oder 2 zur Spieleinstellung bei einem Selbstsperrdifferential, dadurch gekennzeichnet, daß vor dem Drücken des Kegelrades (28) in Richtung Kegelritzel (30) das Kegelrad (28) in Richtung seiner Anlage an der zugehörigen Differentialgehäusehälfte (22) gedrückt wird, um ein Kupplungspaket (26) des Selbstsperrdifferentials zusammenzudrücken.

4. Vorrichtung zur Durchführung des Verfahrens nach einem der Ansprüche 1 bis 3, mit Mitteln (38) zum Halten der Kegelritzel (30) in einer Differentialgehäusehälfte (22), die eine Rotation der Kegelritzel (30) zulassen, mit Mitteln (12) zum wahlweisen Drücken der Kegelräder (28) innerhalb der Differentialgehäusehälfte (22) in Richtung der Kegelritzel (30) und mit Mitteln (14) zur Messung des Ausmaßes der Verschiebung des Kegelrades (28) infolge der Drückbewegung.

5. Vorrichtung nach Anspruch 4, dadurch gekennzeichnet, daß Mittel (40, 46) vorgesehen sind, durch die das Kegelrad (28) von den Kegelritzeln (30) weg gedrückt wird.

6. Vorrichtung nach Anspruch 4 oder 5, dadurch gekennzeichnet, daß Mittel (18) zur genauen Lageeinstellung zwischen der Differentialgehäusehälfte (22) und den Mitteln (12) zum Drücken des Kegelrades (28) vorgesehen sind.

7. Vorrichtung nach einem der Ansprüche 4 bis 6, dadurch gekennzeichnet, daß Mittel (61) zur genauen Lageeinstellung des Kegelrades (28) bezüglich der Mittel (12) zum Drücken des Kegelrades (28) vorgesehen sind.

8. Vorrichtung nach einem der Ansprüche 4 bis 7 mit einem Untergestell (16), einer Spannvorrichtung (10), die auf dem Untergestell (16) befestigt und geeignet ist, um die Kegelritzel (30) in einer Differentialgehäusehälfte (22) festzuhalten, einem Luftzylinder (12), welcher durch einen Fortsatz (54) mit dem Kegelrad (28) in Eingriff bringbar ist, um dieses in Richtung der Kegelritzel (30) zu verschieben, und einem Mikrometer (14) zur Messung der durch den Luftzylinder (12) hervorgerufenen Verschiebung des Kegelrades (28).

9. Vorrichtung nach Anspruch 8, dadurch gekennzeichnet, daß die Spannvorrichtung (10) sich in Richtung des Kegelrades (28) erstreckende Haltestifte (40) und Federmittel (46) enthält, durch welche die Haltestifte (40) gegen das Kegelrad (28) vorgespannt werden, um das Kegelrad (28) von den Kegelritzeln (30) wegzudrücken.

10. Vorrichtung nach Anspruch 8 oder 9, dadurch gekennzeichnet, daß ein Haltering (18) vorgesehen ist, der am Untergestell (16) befestigt ist und der genauen Lageeinstellung zwischen Differentialgehäusehälfte (22) und Luftzylinder (12) dient.

11. Vorrichtung nach einem der Ansprüche 8 bis 10, dadurch gekennzeichnet, daß am Ende des Lufzylinderfortsatzes (54) ein Paßstück (61) angeordnet ist, welches stabil an dem Kegelrad (28) angreift, um dieses bezüglich des Luftzylinders (12) genau auszurichten.

12. Vorrichtung nach einem der Ansprüche 8 bis 11, dadurch gekennzeichnet, daß das Mikrometer (14) eine am Untergestell (16) verschwenkbar gelagerte Stange (64), deren eines Ende beweglich mit dem Luftzylinderfortsatz (54) in Verbindung steht, um sich mit dem Kegelrad (28) zu verschieben, einen sich an der Stange (64) abstützenden Meßkolben (78) und eine durch den Meßkolben (78) gesteuerte Teilstrichanzeige (80) enthält.

13. Vorrichtung nach Anspruch 12, dadurch gekennzeichnet, daß am anderen Ende der Stange (64) ein Gegengewicht (72) angeordnet ist.

14. Vorrichtung nach Anspruch 12 oder 13, dadurch gekennzeichnet, daß der Angriffspunkt des Meßkolbens (78) an der Stange (64) vom Drehpunkt (66) der Stange (64) ebensoweit entfernt liegt, wie die am anderen Ende der Stange (64) liegende bewegliche Verbindung mit dem Luftzylinder (12).

15. Vorrichtung nach Anspruch 14, dadurch gekennzeichnet, daß das mit dem Luftzylinder (12) beweglich verbundene Ende der Stange (64) an einer in der Achse des Luftzylinders (12) liegenden Stelle des Luftzylinders (12) angreift.

Fig. 1

Fig. 2